# EUROPÄISCHE PATENTSCHRIFT

(11) **EP 0 879 347 B1**
(45) Veröffentlichungstag und Bekanntmachung des Hinweises auf die Patenterteilung: **02.10.2002**
(21) Anmeldenummer: 97914116.5
(22) Anmeldetag: 03.02.1997
(51) Int. Cl.: F02C 6/00

(54) **VERFAHREN ZUR ENTSPANNUNG EINES RAUCHGASSTROMS IN EINER TURBINE SOWIE ENTSPRECHENDE TURBINE**
PROCESS FOR EXPANDING A FLUE GAS CURRENT IN A TURBINE AND CORRESPONDING TURBINE
PROCEDE POUR LA DETENTE D'UN COURANT DE GAZ BRULE DANS UNE TURBINE, ET TURBINE CORRESPONDANTE

(30) Priorität: 07.02.1996 DE 19604416
(43) Veröffentlichungstag der Anmeldung: 25.11.1998
(73) Patentinhaber: SIEMENS AKTIENGESELLSCHAFT, 80333 München (DE)
(72) Erfinder: ZIEGNER, Manfred, D-45479 Mülheim an der Ruhr (DE)
(86) Internationale Anmeldenummer: DE9700206
(87) Internationale Veröffentlichungsnummer: WO97029274

(56) Entgegenhaltungen:
- WO-A-91/05946
- CH-A- 241 749
- CH-A- 589 791
- DE-A- 4 330 613
- US-A- 4 197 700

## Beschreibung

Die Erfindung betrifft ein Verfahren zur Entspannung eines heißen Rauchgasstroms in einer von diesem durchströmten Turbine, bei dem zumindest eine Strukturkomponente der Turbine mittels eines zugehörigen Kühlgasstroms gekühlt wird, welcher Kühlgasstrom die Strukturkomponente durchströmt und aus dieser dem Rauchgasstrom zugeführt wird, und bei dem dem Rauchgasstrom in der Turbine Brennstoff zudosiert wird. Die Erfindung betrifft auch eine entsprechende Turbine.

Ein solches Verfahren und eine solche Turbine gehen hervor aus der DE 43 30 612 A1 oder der DE 43 30 613 A1. Hierin sind Hinweise zu dem technischen Gebiet gegeben, die auch im Zusammenhang mit der nachfolgend beschriebenen Erfindung von Bedeutung sind. Auf die gesamten Inhalte beider Schriften wird daher ausdrücklich Bezug genommen.

Die DE 43 30 613 A1 betrifft eine sogenannte Zwischenerhitzung mit dem Ziel, die Abgastemperatur des Rauchgasstroms zu erhöhen, um einen nachfolgenden Dampfprozeß wirtschaftlicher zu machen. Das Prinzip der Zwischenüberhitzung besteht darin, eine Temperaturerhöhung der Verbrennungsluft in der Brennkammer durchzuführen und zusätzlich während der Expansionsphase der verbrannten Verbrennungsluft erneut eine Temperaturerhöhung bei einem niedrigeren Druck durchzuführen, was letztendlich nach einer vollständigen Expansion auf den Atmosphärendruck eine höhere Austrittstemperatur des Rauchgasstroms bedingt. Eine solche Zwischenüberhitzung erfolgt vorzugsweise bis auf die maximal in der Gasturbine zulässige Temperatur, wodurch eine besonders hohe Austrittstemperatur des Rauchgasstroms erreicht wird.

In der GB 2 288 640 A, welche eine Gasturbine mit einer Mehrzahl strömungstechnisch hintereinandergeschalteter Verdichter und ebenfalls strömungstechnisch hintereinandergeschalteter Gasturbinen aufweist, findet ebenfalls eine mehrfache Zwischenerhitzung statt mit dem Ziel einer besonders hohen Austrittstemperatur des Rauchgases. Wie in der DE 43 30 613 A1 ist damit das Ziel einer Wirkungsgraderhöhung über eine Änderung des thermodynamischen Prozesses beschrieben. Insbesondere soll diese mehrfache Wiedererhitzung eine Abänderung des Joule-Prozesses und eine Annäherung an den sogenannten Ericson-Prozeß ermöglichen. Die Temperatur des Rauchgasstroms wird hierbei vorzugsweise in jeder einzelnen Gasturbine auf ca. 1400 °C erhöht. In einer zwischen den Gasturbinen und den Verdichtern angeordneten Brennkammer findet eine unvollständige Verbrennung statt, wobei der gesamte Brennstoff dieser Brennkammer zugeführt wird. Eine über einen jeweiligen Verdichterstrom zugeführte Luftmenge ist jeweils größer als die zur Kühlung erforderliche Luftmenge. Die GB 2 288 640 A verfolgt mithin das Ziel, einen Temperaturverlust infolge der auftretenden Expansion auszugleichen.

In der DE 35 00 447 C2 ist eine Gasturbine beschrieben, deren axialer Strömungskanal in zwei Teilkanäle aufgeteilt ist, durch welche sich die Lauf schaufeln hindurchbewegen. In einem Verbrennungsgas-Sektor strömt das verbrannte Gas und in einem Luft-Sektor die Kühlluft zur Kühlung der Lauf schaufeln. Eine verringerte Leistung der Turbine aufgrund dessen, daß die Laufschaufeln nicht über den gesamten Querschnitt des Strömungskanals, sondern nur in dem Verbrennungsgas-Sektor mit der heißen Verbrennungsluft beaufschlagt werden, soll durch eine Modifizierung der angegebenen Gasturbine beseitigt werden. Hierzu sind in dem Verbrennungsgas-Sektor axial hintereinander angeordnete Brennkammern vorgesehen. Die DE 35 00 447 C2 behandelt mithin ebenfalls wie die DE 43 30 613 A1 eine Form der Zwischenerhitzung, welche hierin allerdings ausschließlich auf den Verbrennungsgas-Sektor beschränkt ist.

Die Erfindung bezieht sich insbesondere auf eine Turbine, die mit einem Kompressor, insbesondere einem Turboverdichter,und einer Verbrennungseinrichtung im Verbund arbeitet, wobei gemäß geläufiger Praxis ein Verbund aus Kompressor, Verbrennungseinrichtung und eigentlicher Turbine als "Gasturbine" bezeichnet wird. Wesentliches Kennzeichen einer Gasturbine ist ihre Arbeitsweise im offenen Kreislauf, also in einem Kreislauf, bei dem das für den thermodynamischen Prozeß erforderliche Strömungsmittel der Umgebung entnommen und nach dem Prozeß wieder der Umgebung zugeführt wird. Im allgemeinen entnimmt der Kompressor Luft aus der Umgebung, komprimiert sie und stellt sie in komprimierter Form der Verbrennungseinrichtung zu. Dort wird in der komprimierten Luft ein Brennstoff verbrannt unter Bildung eines Rauchgasstroms, welcher anschließend der Turbine zugeführt und in der Turbine bis zum normalen Umgebungsdruck entspannt wird. Ein Teil der vom Kompressor bereitgestellten Luft gelangt nicht zur Verbrennungseinrichtung, sondern wird, nach besonderer Kühlung, unmittelbar der Turbine zugeführt, wo er als Kühlgasstrom thermisch hoch belastete Strukturkomponenten kühlt. In einer modernen Gasturbine wird die Luft aus der Umgebung auf das 16fache bis 30fache des Luftdrucks in der Umgebung komprimiert und heizt sich dabei auf eine Temperatur zwischen 350 °C und 500 °C auf. In der Verbrennungseinrichtung erfolgt eine weitere Aufheizung auf Temperaturen zwischen 1100 °C und 1400 °C, und mit einer solchen Temperatur gelangt der gebildete Rauchgasstrom in die Turbine. Wenn der Rauchgasstrom nach seiner Entspannung die Turbine verläßt, hat er bei einem Druck, welcher dem normalen Luftdruck in der Umgebung entspricht, eine Temperatur um 500 °C.

Aufgabe der Erfindung ist, das Verfahren bzw. die Turbine der eingangs genannten Art dahingehend weiterzubilden, daß mit möglichst einfachen Mitteln die Nachteile der unvermeidlichen Kühlgasprozesse ausgeglichen werden.

Im Hinblick auf ein Verfahren wird zur Lösung der Aufgabe angegeben ein Verfahren zur Entspannung eines heißen Rauchgasstroms in einer von diesem durchströmten Turbine, gemäß Anspruch 1.

Im Hinblick auf eine Turbine wird zur Lösung dieser Aufgabe angegeben eine Turbine zur Entspannung eines heißen Rauchgasstroms, gemäß Anspruch 8.

Die Erfindung geht davon aus, daß eine herkömmliche Gasturbine, in der Luft zur Kühlung dient, als thermodynamische Maschine aufgefaßt werden kann, in der zwei getrennte Arbeitsmedien zwei verschiedene Kategorien von Kreisprozessen durchlaufen. Eine erste Kategorie betrifft den eigentlichen und vorstehend beschriebenen Heißgasprozeß, eine zweite Kategorie betrifft Kühlgasprozesse. Das Arbeitsmedium des Heißgasprozesses in der Gasturbine ist das heiße Rauchgas, welches in dem Rauchgasstrom die eigentliche Turbine anströmt. Gasströme, die dem Rauchgas hinter dem Eintritt der Turbine zugemischt werden, bleiben außer Betracht; außer Betracht bleiben also insbesondere die Kühlgasströme, die nach jeweils erfüllter Kühlaufgabe in herkömmlicher Weise aus den gekühlten Strukturkomponenten der Turbine dem Rauchgasstrom zugemischt werden. Arbeitsmedien der Kühlluftprozesse sind die Gase, insbesondere Luft, die zur Kühlung der Strukturkomponenten der Turbine benutzt werden. Entsprechende Luft wird einem der Turbine zugeordneten Kompressor in herkömmlicher Weise am Austritt oder an einer Anzapfung entnommen und, nach besonderer Kühlung, den zu kühlenden Strukturkomponenten der Turbine, insbesondere Leit- und Laufschaufeln, zugeführt. Aus diesen gelangt das Kühlgas letztlich in den Rauchgasstrom und verteilt sich darin. Das Phänomen der Verteilung kann für eine einfache modellmäßige Betrachtung außer Betracht bleiben; in diesem Rahmen können der Heißgasprozeß sowie die Kühlgasprozesse unabhängig voneinander betrachtet werden. Sowohl beim Heißgasprozeß als auch bei einem Kühlgasprozeß werden im Prinzip die gleichen Zustandsänderungen des jeweiligen Arbeitsmediums durchlaufen: Das Arbeitsmedium wird vom Atmosphärendruck bis zu einem vorgegebenen Maximaldruck komprimiert; anschließend erfolgt eine Wärmezufuhr, wobei der Druck des Arbeitsmediums bis auf praktisch unvermeidliche Druckverluste unverändert bleibt; darauf erfolgt eine Expansion des Arbeitsmediums in der Turbine, bis das Arbeitsmedium einen dem Umgebungsdruck entsprechenden Druck erreicht hat; und schließlich wird überschüssige Wärme aus dem Arbeitsmedium abgegeben, bis es die Umgebungstemperatur erreicht hat. Die zuletzt genannte Zustandsänderung erfolgt außerhalb der eigentlichen Gasturbine, kennzeichnend für den offenen Kreislauf.

Ein Heißgasprozeß und ein Kühlgasprozeß unterscheiden sich in erster Linie durch die bei der Aufheizung des jeweiligen Arbeitsmediums realisierten Temperaturdifferenz; beim Heißgasprozeß tritt eine Temperaturdifferenz von über 500 °C, womöglich sogar über 1000 °C, auf, beim Kühlgasprozeß ergibt sich eine Temperaturdifferenz von höchstens 200 °C. Entsprechend unterscheiden sich die Wirkungsgrade der Prozesse und die Beiträge, die die Prozesse zur insgesamt von einer Gasturbine erzeugten mechanischen Arbeit liefern. Ein beachtlicher Teil der von einer Turbine insgesamt gelieferten mechanischen Arbeit muß aufgewandt werden, um das Arbeitsmedium bzw., im Rahmen der soeben angestellten Betrachtung, die Arbeitsmedien zu komprimieren. Die aus einem thermodynamischen Prozeß frei zur Verfügung stehende "Nutzarbeit" ist die Differenz zwischen der von der Turbine gelieferten "Expansionsarbeit" und der für die Kompression erforderlichen "Kompressionsarbeit". Die Nutzarbeit ist um so größer, je größer bei gegebener Temperaturdifferenz der Kompression, vorbestimmt durch den jeweils eingesetzten Kompressor, die Temperaturdifferenz der Expansion ist. Hieraus ergibt sich, daß ein Kühlgasprozeß allenfalls einen sehr geringen Beitrag zur Nutzarbeit leisten kann.

Thermodynamische Verluste, die sich in einer realen Gasturbine sowohl bei der Kompression als auch bei der Expansion ergeben, erfordern eine Veränderung der soeben angestellten Betrachtung dahingehend, daß bei der Kompression ein vergrößertes Temperaturgefälle und bei der Expansion ein verkleinertes Temperaturgefälle zugrundegelegt werden muß. Hieraus ergibt sich eine weitere Reduzierung der aus einem Kühlluftprozeß erwartbaren Nutzarbeit, und es muß die Möglichkeit in Betracht gezogen werden, daß die Nutzarbeit eines Kühlgasprozesses negativ wird; unter Umständen verschlingt ein Kühlgasprozeß mehr Arbeit, als er selbst liefert. Da eine moderne Gasturbine die Abzweigung von 20% bis 25% der insgesamt verfügbaren verdichteten Luft als Kühlluft erfordert, ist die Einbuße, die hinsichtlich der Nutzarbeit in Kauf genommen werden muß, durchaus bemerkenswert; man muß immerhin davon ausgehen, daß für den einzigen Heißgasprozeß, welcher im wesentlichen allein die von der Gasturbine abgegebene Nutzarbeit bestimmt, höchstens 80% der insgesamt verfügbaren Luft beitragen können.

Die Erfindung geht von der Überlegung aus, daß eine Zumischung von Kühlluft (oder anderem Kühlgas) zum sich entspannenden Rauchgas in einer Turbine thermodynamisch unschädlich wäre, wenn die zugemischte Kühlluft (bzw. das zugemischte Kühlgas) dieselbe Temperatur hätte wie das Heißgas. Es versteht sich, daß ein gewisser Verlust verbleibt, wenn das Kühlgas besonderen Behandlungen unterworfen wird, beispielsweise einer Kühlung, oder wenn das Kühlgas mit zusätzlichen Gebläsen auf einen höheren Druck als das Rauchgas gebracht werden muß; dies kann unter Umständen erforderlich sein, um eine erforderliche Kühlwirkung zu gewährleisten oder eventuell vorhandenen Drosselstellen in einem Kühlkanalsystem, durch welches der Kühlgasstrom geführt werden muß, kompensieren. Von solchen Verlusten muß vorliegend freilich abgesehen werden; sie sowie ihre allfällige Minimierung können zusätzliche Erwägungen erfordern. Da, wie gesagt, Kühlgas in den zu kühlenden Strukturkomponenten der Turbine herkömmlicherweise um höchstens 200 °C aufgeheizt wird und damit nur bis zu einer Temperatur von vielleicht 700 °C gelangt, muß also eine zusätzliche Aufheizung des Kühlgases erfolgen.

Im Sinne der Erfindung wird diese Aufheizung erst dann und in gewünschter Höhe realisiert, wenn das Kühlgas seine Kühlaufgabe erfüllt hat, nämlich dann, wenn das Kühlgas aus der zu kühlenden Strukturkomponente heraus in das Rauchgas gelangt ist. Dabei nutzt die Erfindung aus, daß ein Brennstoff, beispielsweise Erdgas, bei den in einem heißen Rauchgas jedenfalls dann, wenn dieses sich in den ersten Stufen der Turbine befindet, herrschenden Temperaturen sich sehr schnell und ohne Erzeugung einer Flamme entzündet und im wesentlichen vollständig verbrennt. Die Verhältnisse in dem heißen Rauchgasstrom sind durchaus anders als die Verhältnisse in einer Verbrennungseinrichtung einer Gasturbine. Eine Verbrennungseinrichtung wird angeströmt mit Temperaturen, die höchstens 500 °C betragen; daher ist zur Verbrennung jedweden Brennstoffs in der Verbrennungseinrichtung eine Flammenbildung erforderlich. In den ersten Stufen einer Turbine herrscht eine Temperatur von 1000 °C oder mehr; daher kann dort, anders als in einer herkömmlichen Verbrennungseinrichtung, stets mit einer spontanen exothermen Reaktion zwischen vorhandenem Sauerstoff und gesondert zugeführtem Brennstoff gerechnet werden. Es sei bemerkt, daß in einem Rauchgasstrom in einer herkömmlichen Gasturbine stets Sauerstoff vorliegt; ein Verbrennungsprozeß in einer Verbrennungseinrichtung einer herkömmlichen Gasturbine verläuft stets unter einem Überschuß von Sauerstoff, und die herkömmliche Kühlung mit Luft bringt zusätzlichen Sauerstoff hinzu. Für die Verbrennung von Brennstoff in dem benötigten Umfang ist somit stets ausreichend Sauerstoff vorhanden.

Die Erfindung hat darüber hinaus noch weitere Vorteile: Durch die zusätzliche Verbrennung von Brennstoff wird die Leistung der Turbine erhöht, ohne daß die Temperatur des Rauchgases beim Eintritt in die Turbine steigen muß; bei gleicher Auslegung der Turbine und bei gleichbleibender Auswahl der zu ihrem Bau verwendeten Werkstoffen wird somit die von einer Gasturbine, zu der die Turbine gehört, abgegebene Nutzarbeit deutlich erhöht. Außerdem wird vermieden, daß sich der Rauchgasstrom über die durch die Entspannung vorgegebene Temperaturabsenkung weiter abkühlt; dies verbessert den thermodynamischen Wirkungsgrad der Turbine. Durch die zusätzliche Verbrennung von Brennstoff wird in der Turbine im wesentlichen derjenige Zustand hergestellt, der ohne das Vorsehen von Kühlgasströmen herrschen würde; abgesehen von zusätzlichen Energieverlusten in dem Leitungssystem, welches ein Kühlgasstrom durchfließen muß, ist es daher mehr oder weniger gleichgültig, welche Menge an Kühlgas für die zu kühlenden Strukturkomponenten bereitgestellt wird. Unter Umständen können die Kühlkanalsysteme in den entsprechenden Strukturkomponenten der Turbine somit vereinfacht und die Fertigungskosten dieser Strukturkomponenten deutlich gesenkt werden. Die Erfindung ist allerdings auch mit modernen, hohe Kühlwirkung mit vergleichsweise kleinen Kühlluftmengen erzielenden Kühlsystemen kombinierbar, denn bei einer solchen Kombination werden jedenfalls zusätzliche thermodynamische Verluste, die sich im Zusammenhang mit der notwendigen Aufbereitung der Kühlluft ergeben, am geringsten gehalten. Schließlich kann die Verbrennung von Brennstoff in der Turbine eine Zwischenerhitzung des Rauchgasstroms ersetzen. Eine Zwischenerhitzung wird realisiert, indem man eine Turbine zweiteilig ausführt und den Rauchgasstrom zwischen den beiden Teilen der Turbine durch Verbrennung von entsprechend zugeführtem Brennstoff erneut erhitzt; das Prinzip entspricht dem vielfach angewendeten Prinzip der Zwischenüberhitzung in einer Dampfturbinenanlage.

Im Rahmen einer bevorzugten Weiterbildung wird der Brennstoff dem Kühlgasstrom zugemischt, bevor dieser dem Rauchgasstrom zugeführt wird; die entsprechende Turbine weist in dem Kühlleitungssystem entsprechend einen Mischer zur Zumischung von Brennstoff zu dem den Mischer durchströmenden Kühlgasstrom auf. Die Zumischung des Brennstoffs erfolgt weiterhin vorzugsweise, bevor dieser die Strukturkomponente durchströmt, und außerdem bevorzugt wird der Brennstoff homogen in den Kühlgasstrom eingemischt. Dies ist von Bedeutung deshalb, weil eine homogene Verteilung des Brennstoffs in den Kühlgasstrom die Zündfähigkeit des entstandenen Gemisches am weitesten herabsetzt.

In dem Fall, in dem der Kühlgasstrom im wesentlichen aus Luft besteht, wird der Brennstoff vorzugsweise zu einem Gewichtsanteil von höchstens 2% dem Kühlgasstrom zugemischt; in diesem Mischungsverhältnis ist eine unbeabsichtigte Zündung des Gemisches aus Luft und Brennstoff im wesentlichen ausgeschlossen, insbesondere dann, wenn der Brennstoff homogen in den Kühlgasstrom eingemischt ist. Demselben Zweck dient es und den entsprechenden Vorteil vergrößert es, wenn der Kühlgasstrom vor Zumischung des Brennstoffs gekühlt wird, wofür das Kühlleitungssystem der Turbine zwischen dem Kompressor und dem Mischer mit einem entsprechenden Kühler zur Kühlung des Kühlgasstroms zu versehen wäre; eine solche Kühlung ist von besonderer Bedeutung dann, wenn die verdichtete Luft, aus der der Rauchgasstrom gebildet wird, auf mehr als etwa das 20fache des Umgebungsdrucks komprimiert und ein Temperaturniveau bei etwa 500 °C erreicht wird.

Die gekühlte Strukturkomponente der Turbine ist vorzugsweise ein Leitrad, insbesondere ein erstes Leitrad, welches von dem Rauchgasstrom beim Eintritt in die Turbine direkt angeströmt wird, oder ein direkt hinter einem solchen ersten Leitrad angeordnetes zweites Leitrad. Die dem ersten Leitrad zugeführte Kühlluftmenge beträgt vorzugsweise ca. 5% bis 15%, insbesondere 10% der gesamten durch den Verdichter strömenden Luftmenge. Entsprechend werden für die Anwendung der Erfindung vor allem die im Bereich des Turbineneintritts liegenden Stufen der Turbine in Betracht gezogen; an diesen Turbinenstufen ist das Temperaturniveau in dem Rauchgas besonders hoch, und damit der durch die besondere Aufheizung der Kühlluft auf ein Temperaturniveau des Rauchgasstroms erzielbare Vorteil am größten. Da Leiträder in der Turbine ruhende Strukturkomponenten sind, entfällt bei der Zufuhr des Kühlgases zu diesen Strukturkomponenten auch ein Übergang aus einem ruhenden in einen rotierenden Kanal, wie er beispielsweise zur Zustellung von Kühlluft zu Strukturkomponenten eines Rotors der Turbine erforderlich wäre. Die Kühlung rotierender Komponenten der Turbine kann weiterhin mit Luft ohne zudosierten Brennstoff erfolgen; die Zugabe von Brennstoff zum Zwecke der Kompensation einer ansonsten eintretenden Temperaturabsenkung kann allein über ruhende Strukturkomponenten erfolgen.

Weiterhin bevorzugt ist die Anwendung des Verfahrens bzw. die Ausgestaltung der Turbine dahingehend, daß der Rauchgasstrom und der Kühlgasstrom gebildet werden aus Luft, welche in einem einzigen Kompressor, insbesondere einem Turboverdichter, komprimiert wird. Der Kompressor wird dabei insbesondere von der Turbine angetrieben, ist also mit der Turbine und einer hier nicht näher zu beschreibenden Verbrennungseinrichtung zu einer Gasturbine im Sinne der herkömmlichen Praxis kombiniert.

Grundlagen sowie Ausführungsbeispiele der Erfindung werden nachfolgend anhand der Zeichnung erläutert. Die Zeichnung ist, soweit sie ein Ausführungsbeispiel betrifft, zur Verdeutlichung bestimmter Merkmale teilweise schematisiert oder leicht verzerrt ausgeführt; sie ist nicht als maßstabsgerechte Wiedergabe konkreter Ausführungsbeispiele zu verstehen. Im einzelnen zeigen:
- Figur 1: ein Entropie-Enthalpie-Diagramm zur Erläuterung eines Heißgasprozesses und eines Kühlgasprozesses;
- Figur 2: eine Darstellung einer Gasturbine im Sinne vorstehender Ausführungen;
- Figur 3: einen axialen Längsschnitt durch eine Turbine; und
- Figur 4: einen axialen Querschnitt durch ein erstes Leitrad einer Turbine.

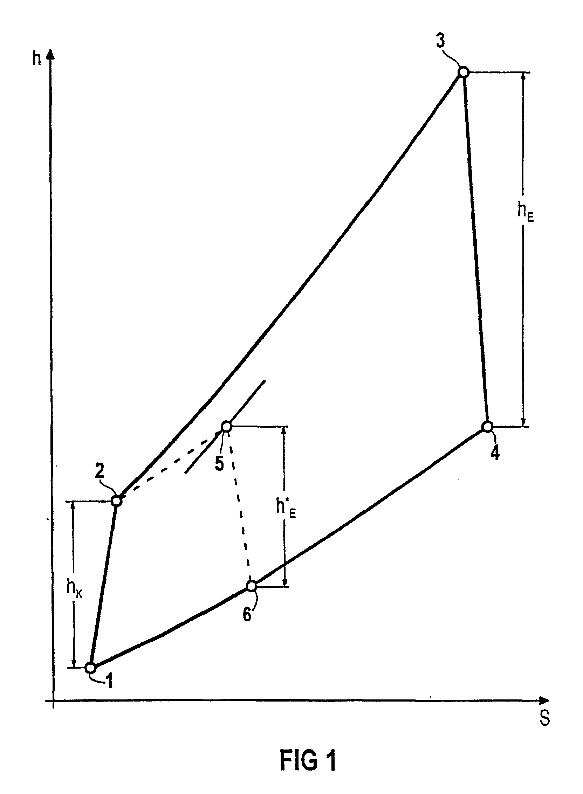

Figur 1 zeigt, aufgetragen in einem Diagramm, welches die Enthalpie h gegen die Entropie S eines Arbeitsmediums darstellt, einen Heißgasprozeß und einen Kühlgasprozeß, wie sie in einer Gasturbine ablaufen. Enthalpie h und Entropie S sind thermodynamische Zustandsgrößen, die zur Beschreibung eines thermodynamischen Prozesses in einer Turbomaschine herkömmlicherweise benutzt werden. Dabei ist die Enthalpie eine Größe, die eng mit der Temperatur des Arbeitsmediums korreliert ist. Unter der Bedingung, daß der Druck des Arbeitsmediums konstant bleibt, gibt sie dessen Wärmeinhalt an. Die Entropie ist eine andere thermodynamische Zustandsgröße, die unter anderem bestimmt, welcher Anteil der in einem thermodynamischen System, insbesondere in dem hier in Betracht gezogenen Arbeitsmedium, insgesamt verfügbaren Energie in Form mechanischer Energie extrahierbar ist. Die Entropie als thermodynamische Zustandsgröße ist insbesondere dadurch gekennzeichnet, daß sie bei einer adiabatischen Kompression oder Expansion eines Arbeitsmediums konstant bleibt.

Ein Heißgasprozeß, welcher hauptsächlich die von einer Gasturbine produzierte Energie liefert, ist dargestellt von denjenigen Linien, welche die Punkte 1, 2, 3 und 4 miteinander verbinden. Der Punkt 1 gibt den thermodynamischen Zustand des Arbeitsmediums, also Luft, bei den normalen Umgebungsbedingungen hinsichtlich Druck und Temperatur an. Die Linie zwischen den Punkten 1 und 2 symbolisiert die Kompression des Arbeitsmediums in dem Kompressor, wobei sich die Entropie des Arbeitsmediums nur wenig ändert; diese Änderungen entsprechen irreversiblen Prozessen und also Verlusten. Die Linie zwischen den Punkten 2 und 3 symbolisiert die Aufheizung des Arbeitsmediums nach erfolgter Kompression bei weitgehend konstantem Druck. Selbstverständlich impliziert die herkömmlich in Form einer Verbrennung ablaufende Aufheizung des Arbeitsmediums eine Änderung seiner chemischen Zusammensetzung; diese Änderung hat auf die Thermodynamik jedoch keinen wesentlichen Einfluß. Der zu entspannende Rauchgasstrom liegt vor beim Punkt 3. Zwischen den Punkten 3 und 4 erfolgt die weitgehend adiabatische Expansion des Rauchgasstroms in der Turbine, und die Linie zwischen den Punkten 4 und 1 entspricht schließlich einer Abkühlung des bereits auf Umgebungsdruck entspannten Arbeitsmediums zur Umgebungstemperatur. Im Falle einer Gasturbine wird dies dadurch realisiert, daß sich das aufgeheizte Arbeitsmedium in der Umgebung, die als thermodynamisches Plenum anzusehen ist, verteilt. Die mechanische Arbeit, die der Heißgasprozeß leistet, ist gegeben durch die Differenz zwischen der bei der Expansion abgebauten Expansionsenthalpie h_{E} und der bei der Kompression aufgebauten Kompressionsenthalpie h_{K}. Ein Kühlgasprozeß ist ebenfalls in Figur 1 dargestellt; dieser Kühlgasprozeß verläuft zwischen den Punkten 1, 2, 5 und 6. Der Punkt 5 liegt unterhalb der die Punkte 2 und 3 verbindenden Linie; dies erklärt sich daraus, daß das Kühlgas dem Rauchgasstrom erst zugeführt wird, nachdem dieser bereits Druck abgebaut hat. Man erkennt deutlich, daß die Expansionsenthalpie h_{E}* deutlich kleiner ist als die Expansionsenthalpie h_{E} des Heißgasprozesses, so daß der Kühlgasprozeß kaum einen Beitrag zur tatsächlich erbrachten Nutzarbeit leisten kann.

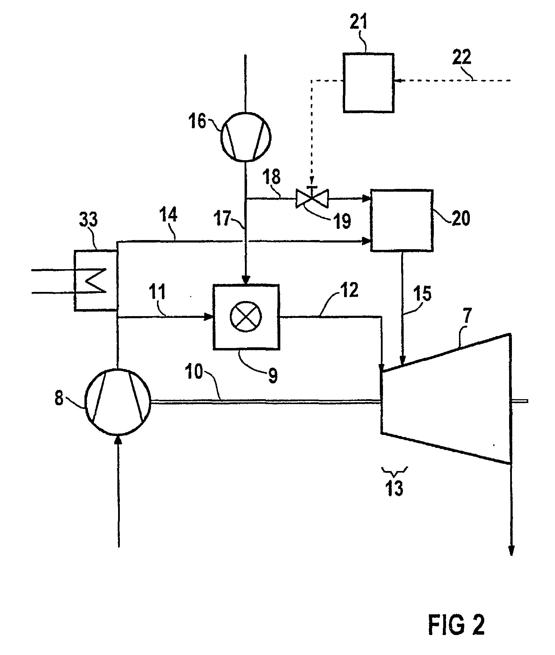

Die Erfindung zeichnet sich vor allem dadurch aus, daß der Punkt 5 auf einer Linie konstanten Drucks nach rechts oben verschoben wird und in die Nähe des Punktes 3 gelangt; auf diese Weise kann die Expansionsenthalpie h_{E}* des Kühlgasprozesses deutlich gesteigert werden, so daß auch er Nutzarbeit in nennenswertem Umfang liefern kann. Wie dies zu bewerkstelligen ist, wird nunmehr anhand der Figuren 2, 3 und 4 erläutert.

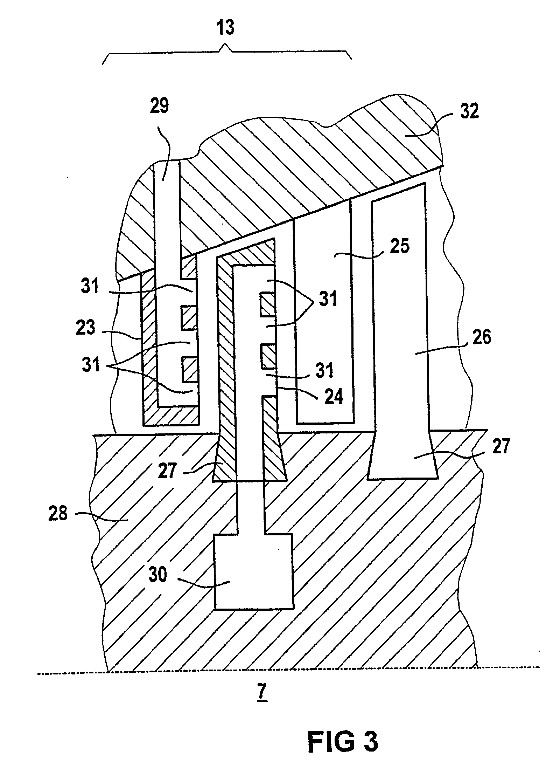

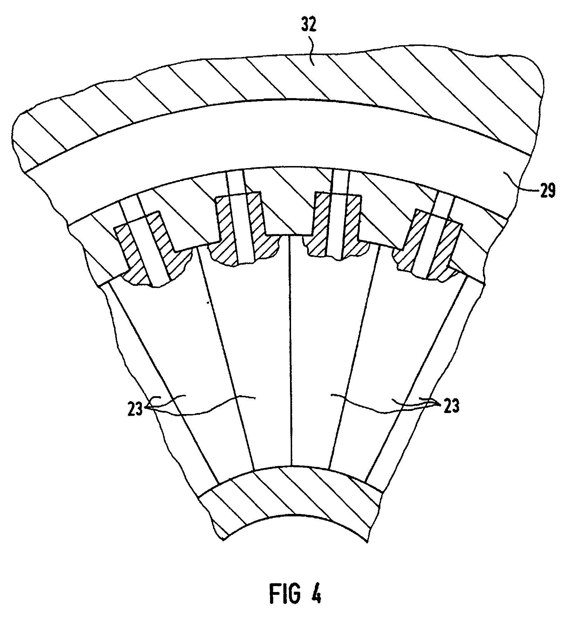

Figur 2 kann betrachtet werden sowohl als schematisierte Darstellung einer Gasturbine als auch als schematisierte Darstellung des in einer Gasturbine ablaufenden thermodynamischen Prozesses. Die Figuren 3 und 4 sollen gewisse konstruktive Einzelheiten verdeutlichen, die in einer Gasturbine gemäß Figur 2 von Bedeutung sein können.

Figur 2 zeigt eine Turbine 7, welche mit einem Kompressor 8, insbesondere einem Turboverdichter, und einer Verbrennungseinrichtung 9 zu einer Gasturbine vereinigt ist, in welcher ein thermodynamischer Prozeß, umfassend einen Heißgasprozeß sowie zumindest einen Kühlgasprozeß der anhand von Figur 1 erläuterten Art, umfaßt. Die Turbine 7 treibt den Kompressor 8 über eine Turbinenwelle 10 an. Der Kompressor 8 stellt einen Zuluftstrom aus verdichteter Luft bereit, welcher über eine Zuluftleitung 11 zur Verbrennungseinrichtung 9 gelangt, wo er aufgeheizt und in einen Rauchgasstrom umgewandelt wird, welcher durch eine Rauchgasleitung 12 zur Turbine 7 gelangt. Dort fließt er einem Einströmbereich 13 zu, um schließlich nach vollständiger Entspannung wieder in die Umgebung entlassen zu werden.

Im Hinblick auf die Erläuterung des Verfahrens können die Zuluftleitung 11 und die Rauchgasleitung 12 angesehen werden als gleichbedeutend mit dem Zuluftstrom 11 bzw. dem Rauchgasstrom 12, den sie jeweils leiten. Ebenso sind die nachfolgend zu erklärenden Kühlleitungen 14 und 15 zu verstehen als vorrichtungsmäßige Pendants für den Kühlgasstrom 14 bzw. 15, den sie leiten. Gleiches gilt schließlich für die Brennstoffleitung 17 bzw. die Abzweigung 18 und den Brennstoff, den diese jeweils leiten.

Da der Rauchgasstrom 12 sehr heiß ist, muß eine Möglichkeit vorgesehen werden, die Turbine 7 bzw. ihre entsprechend belasteten Strukturkomponenten zu kühlen. Hierfür wird aus dem Zuluftstrom 11 über eine erste Kühlleitung 14 Luft abgezapft, welche nicht zur Verbrennungseinrichtung 9 gelangt, sondern als Kühlgasstrom mehr oder weniger direkt, vorliegend über eine zweite Kühlleitung 15, der Turbine 7 zugeführt wird. Um den Kühlgasprozeß, welchen der Kühlgasstrom 14, 15 durchläuft, zu verbessern, wird von dem über eine Brennstoffpumpe 16 und eine Brennstoffleitung 17 der Verbrennungseinrichtung 9 zugeführten Brennstoff über eine Abzweigung 18 und ein Stellventil 19 ein Teil abgezweigt, welcher zu einem Mischer 20 gelangt und dort mit der durch die erste Kühlleitung 14 geförderten Kühlluft vermischt wird. Der somit erhaltene, mit Brennstoff versetzte Kühlgasstrom gelangt durch die zweite Kühlleitung 15 zur Turbine 7, wird also dem Rauchgasstrom 12 zudosiert, wo er unter Freisetzung zusätzlicher Wärmeenergie verbrennt. Hierdurch wird die gewünschte zusätzliche Aufheizung des Kühlgasstroms 14, 15 realisiert.

Von großer Bedeutung ist, daß das Stellventil 19 zum angegebenen Zweck eingestellt bzw. gesteuert wird, wofür eine Steuereinrichtung 21 vorgesehen ist, welche das Stellventil 19 entsprechend einer Vorgabe 22 steuert. Die Vorgabe 22 kann ein rechnerisch oder erfahrungsmäßig ermittelter Wert sein und einer in dem Kühlgasstrom gewünschten Brennstoffkonzentration entsprechen; es ist selbstverständlich auch möglich, die Steuereinrichtung 21 in einen Regelkreis einzubeziehen, welcher Informationen aus einem geeignet angeordneten Sensor, beispielsweise einem Temperatursensor in der Turbine 7, auswertet und entsprechend die Vorgabe 22 liefert. Die Kombination aus dem Stellventil 19 und der Steuereinrichtung 21 bildet einen Dosierer 19, 21 für den dem Rauchgasstrom 12 zuzudosierenden Brennstoff 18. Um den Kühlgasstrom 14, 15 zur Verbesserung der Kühlwirkung in der Turbine 7 und zur Herabsetzung der Wahrscheinlichkeit einer vorzeitigen Entzündung des zudosierten Brennstoffs 18 zu kühlen, ist in der ersten Kühlleitung 14 ein Kühler 33 vorgesehen.

Figur 3 zeigt eine Teilansicht eines axialen Längsschnitts durch die Turbine 7, unter Einbeziehung ihres Einströmbereichs 13, in welchen der zu entspannende Rauchgasstrom 12 zuerst gelangt. Der Rauchgasstrom 12 durchströmt die Turbine 7 von links nach rechts. Er gelangt zunächst zu einer ersten Leitschaufel 23, welche mit einer Vielzahl identischer Leitschaufeln ein ringförmiges erstes Leitrad bildet. Dieses erste Leitrad 23 ist in dem in Figur 4 gezeigten Querschnitts ausschnittsweise dargestellt. Gemäß Figur 3 gelangt der Rauchgasstrom hinter dem ersten Leitrad 23 zu einem ersten Laufrad 24, gebildet aus einer Vielzahl erster Lauf schaufeln 24, welche während des Betriebs der Turbine 7 anders als die ersten Leitschaufeln 23 rotieren. Hinter dem ersten Laufrad angeordnet ist ein zeites Leitrad 25 aus zweiten Leitschaufeln sowie ein zweites Laufrad 26 aus zweiten Laufschaufeln; jedes Leitrad 23 oder 25 bildet mit dem unmittelbar folgenden Laufrad 24 bzw. 26 eine Turbinenstufe. Ein herkömmliche Gasturbine hat insbesondere vier Turbinenstufen, wobei in der Regel zumindest die im Einströmbereich 13 liegenden Turbinenstufen kühlbar sind.

Die Laufschaufeln 24 und 26 sind mit zugehörigen Schaufelfüßen 27 in einem drehbaren Turbinenrotor 28 verankert; die Schaufelfüße 27 müssen insbesondere die erheblichen Zentrifugalkräfte aufnehmen, denen die Laufschaufeln 24 und 26 während des Betriebs ausgesetzt sind.

Die erste Leitschaufel 23 wird gekühlt, indem ihr durch einen innenliegenden Kühlkanal 29 ein Teil des Kühlgasstroms zugeführt wird; zur Kühlung der ersten Laufschaufel 24 vorgesehen ist ein interner Kühlkanal 30. Aus den Kühlkanälen 29 und 30 gelangt der Kühlgasstrom durch Kühlgasöffnungen 31 in den Rauchgasstrom 12.

Dem Kühlkanal 29 kann, da er lediglich durch das feststehende Turbinengehäuse 32 der Turbine 7 geführt werden muß, ohne weiteres der mit Brennstoff versetzte Kühlgasstrom 15 zugeführt werden. Da der Kühlkanal 30 letztlich durch den während des Betriebs rotierenden Turbinenrotor 28 geführt werden muß, wird ihm zweckmäßigerweise ein Kühlgasstrom 14 ohne Brennstoff zugeführt, denn auf diese Weise wird vermieden, daß Brennstoff durch ein Übergangsteil zwischen einer feststehenden und einer rotierenden Turbinenkomponente geführt werden muß. Für die Praxis bedeutet dies jedoch kaum eine Einschränkung, da es in den meisten Fällen ausreichen dürfte, den Brennstoff allein durch Kühlkanäle nach Art des Kühlkanals 29 zu führen.

Auf Figur 4 ist bereits hingewiesen worden; diese Figur zeigt im wesentlichen einen Querschnitt durch das erste Leitrad 23, gebildet von den ersten Leitschaufeln 23. Zur Erläuterung ist somit hauptsächlich zu verweisen auf die Erläuterung der Figur 3; ergänzend zur Figur 3 zeigt Figur 4 auch Mittel, um die ersten Leitschaufeln 23 in dem Turbinengehäuse 32 zu befestigen, sowie Einzelheiten des Kühlkanals 29.

Die vorliegend beschriebene Erfindung zeichnet sich insbesondere dadurch aus, daß gewisse Nachteile, die in herkömmlichen Gasturbinen aufgrund der Notwendigkeit zur Kühlung bestimmter Strukturkomponenten in Kauf genommen werden mußten, ausgeräumt sind. Dies erfolgt im wesentlichen dadurch, daß die Kühlgasprozesse, die im Rahmen solcher Kühlungen ablaufen müssen, den Heißgasprozessen, welche die von einer Gasturbine abgegebene Nutzarbeit hauptsächlich liefern, angeglichen werden.

## Patentansprüche

1. Verfahren zur Entspannung eines heißen Rauchgasstroms (12) in einer von diesem durchströmten Turbine (7), bei dem zumindest eine Strukturkomponente (23,24,25,26) der Turbine (7) mittels eines zugehörigen Kühlgasstroms (14,15) gekühlt wird, welcher Kühlgasstrom (14,15) die Strukturkomponente (23, 24, 25, 26) durchströmt und aus dieser dem Rauchgasstrom (12) zugeführt wird, und bei dem dem Rauchgasstrom (12) in der Turbine (7) Brennstoff (18) zudosiert wird, wobei der Brennstoff (18) derart zudosiert wird, daß eine Temperaturabsenkung in dem Rauchgasstrom (12), die sich ergibt durch Zuführung des Kühlgasstroms (14,15) ohne Zudosierung des Brennstoffs (18), durch Verbrennung des zudosierten Brennstoffs (18) weitgehend kompensiert wird,
**dadurch gekennzeichnet, daß**
der Kühlgasstrom (14,15) im wesentlichen aus Luft besteht und bei dem der Brennstoff (18) zu einem Gewichtsanteil von höchstens 2 % dem Kühlgasstrom (14,15) zugemischt wird, wobei der Kühlgasstrom (14,15) vor Zumischung des Brennstoffs (18) gekühlt wird.

2. Verfahren nach Anspruch 1, bei dem der Brennstoff (18) dem Kühlgasstrom (14,15) zugemischt wird, bevor dieser dem Rauchgasstrom (12) zugeführt wird.

3. Verfahren nach Anspruch 2, bei dem der Brennstoff (18) dem Kühlgasstrom (14,15) zugemischt wird, bevor dieser die Strukturkomponente (23,24,25,26) durchströmt.

4. Verfahren nach Anspruch 2 oder 3, bei dem der Brennstoff (18) homogen in den Kühlgasstrom (14,15) eingemischt wird.

5. Verfahren nach einem der vorigen Ansprüche, bei dem die Strukturkomponente (23,24,25,26) ein Leitrad (23) in der Turbine (7) ist, vorzugsweise ein erstes Leitrad (23) , welches von dem Rauchgasstrom (12) beim Eintritt in die Turbine (7) direkt angeströmt wird, oder ein direkt hinter einem solchen ersten Leitrad (23) angeordnetes zweites Leitrad (25).

6. Verfahren nach einem der vorigen Ansprüche, bei der der Rauchgasstrom (12) und der Kühlgasstrom (14,15) gebildet werden aus Luft, welche in einem einzigen Kompressor (8), insbesondere einem Turboverdichter (8), komprimiert wird.

7. Verfahren nach Anspruch 6, bei dem der Kompressor (8) von der Turbine (7) angetrieben wird.

8. Turbine (7) zur Entspannung eines heißen Rauchgasstroms (12), mit zumindest einer Strukturkomponente (23,24,25,26), die eine Kühlkanalanordnung (29,30) für einen durchströmenden und dem Rauchgasstrom (12) zuzuführenden Kühlgasstrom (14,15) aufweist, und welcher ein Dosierer (19,21) zur Zudosierung von Brennstoff (18) in den Rauchgasstrom (12) zugeordnet ist, wobei der Dosierer (19,21) eine Steuereinrichtung (21) aufweist zur Steuerung der Zudosierung der Menge an Brennstoff derart, daß durch die Verbrennung des zudosierten Brennstoffs eine Temperaturabsenkung in dem Rauchgasstrom (12) infolge der Zuführung des Kühlgasstroms (14,15) weitgehend kompensiert ist,
**dadurch gekennzeichnet, daß**
der Turbine (7) ein Kompressor (8), insbesondere ein Turboverdichter (8), zugeordnet ist, der zur Bereitstellung des Rauchgasstroms (12) über eine Verbrennungseinrichtung (9) und zur Bereitstellung des Kühlgasstroms (14,15) über ein Kühlleitungssystem (14,15) mit der Turbine (7) verbunden ist, wobei das Kühlleitungssystem (14,15) einen Mischer (20) zur Zumischung von Brennstoff (18) zu dem Kühlgasstrom (14,15) und zwischen dem Kompressor (8) und dem Mischer (20) einen Kühler (33) aufweist.

9. Turbine (7) nach Anspruch 8, bei der die Strukturkomponente (23,24,25,26) ein Leitrad (23,25) ist, vorzugsweise ein erstes Leitrad (23), welches von dem Rauchgasstrom (12) beim Eintritt in die Turbine (7) direkt angeströmt wird, oder ein direkt hinter einem solchen ersten Leitrad (23) angeordnetes zweites Leitrad (25).

10. Turbine (7) nach Anspruch 9, bei der das Leitrad (23,25) eine Vielzahl von Leitschaufeln (23,25) aufweist, deren jede einen von einem Teil des Kühlgasstroms (12) durchströmbaren Kühlkanal (29,30) hat.

11. Turbine (7) nach Anspruch 8, die mit dem Kompressor (8) zu dessen Antrieb mechanisch verkuppelt ist.

12. Turbine (7) nach Anspruch 11, bei der das Leitrad (23,25) eine Vielzahl von Leitschaufeln (23,25) aufweist, deren jede einen von einem Teil des Kühlgasstroms (12) durchströmbaren Kühlkanal (29,30) hat.

13. Turbine (7) nach einem der Ansprüche 10 bis 12, welcher ein Kompressor (8), insbesondere ein Turboverdichter (8), zugeordnet ist, der zur Bereitstellung des Rauchgasstroms (12) über eine Verbrennungseinrichtung (9) und zur Bereitstellung des Kühlgasstroms (14,15) über ein Kühlleitungssystem (14,15) mit der Turbine (7) verbunden ist.

14. Turbine (7) nach Anspruch 13, die mit dem Kompressor (8) zu dessen Antrieb machanisch verkuppelt ist.

15. Turbine (7) nach Anspruch 13 oder 14, bei der das Kühlleitungssystem (14,15) einen Mischer (20) zur Zumischung von Brennstoff (18) zu dem Kühlgasstrom (14,15) aufweist.

16. Turbine (7) nach Anspruch 15, bei der das Kühlleitungssystem (14,15) zwischen dem Kompressor (8) und dem Mischer (20) einen Kühler (33) aufweist.

## Claims

1. Method of expanding a hot flue-gas flow (12) in a turbine (7) through which this flue-gas flow (12) passes, in which at least one structural component (23, 24, 25, 26) of the turbine (7) is cooled by means of an associated cooling-gas flow (14, 15), which flows through the structural component (23, 24, 25, 26) and is fed from the latter to the flue-gas flow (12), and in which fuel (18) is added in a metered fashion to the flue-gas flow (12) in the turbine (7), the fuel (18) being added in a metered fashion in such a way that a temperature drop in the flue-gas flow (12), which temperature drop results from the feeding of the cooling-gas flow (14, 15) without a metered addition of the fuel (18), is largely compensated for by combustion of the fuel (18) added in a metered fashion, **characterized in that** the cooling-gas flow (14, 15) consists essentially of air and in which the fuel (18) is admixed with the cooling-gas flow (14, 15) in a percentage by weight of 2% at most, the cooling-gas flow (14, 15) being cooled before admixing the fuel (18).

2. Method according to Claim 1, in which the fuel (18) is admixed with the cooling-gas flow (14, 15) before the latter is fed to the flue-gas flow (12).

3. Method according to Claim 2, in which the fuel (18) is admixed with the cooling-gas flow (14, 15) before the latter flows through the structural component (23, 24, 25, 26).

4. Method according to Claim 2 or 3, in which the fuel (18) is mixed homogeneously into the cooling-gas flow (14, 15).

5. Method according to one of the preceding claims, in which the structural component (23, 24, 25, 26) is a guide wheel (23) in the turbine (7), perferably a first guide wheel (23), which is subjected directly to the flue-gas flow (12) at the inlet to the turbine (7), or a second guide wheel (25) arranged directly behind such a first guide wheel (23).

6. Method according to one of the preceding claims, in which the flue-gas flow (12) and the cooling-gas flow (14, 15) are formed from air which is compressed in a single compressor (8), in particular a turbocompressor (8).

7. Method according to Claim 6, in which the compressor (8) is driven by the turbine (7).

8. Turbine (7) for expanding a hot flue-gas flow (12), having at least one structural component (23, 24, 25, 26) which has a cooling-passage arrangement (29, 30) for a cooling-gas flow (14, 15) flowing through and to be fed to the flue-gas flow (12), and to which a metering arrangement (19, 21) for the metered addition of fuel (18) to the flue-gas flow (12) is allocated, the metering arrangement (19, 21) having a controlling device (21) for controlling the metered addition of the quantity of fuel, a temperature drop in the flue-gas flow (12) as a result of the feeding of the cooling-gas flow (14, 15) being largely compensated for by the combustion of the fuel added in a metered fashion, **characterized in that** a compressor (8), in particular a turbocompressor (8), is allocated to the turbine (7), which compressor (8) is connected to the turbine (7) for providing the flue-gas flow (12) via a combustion device (9) and for providing the cooling-gas flow (14, 15) via a cooling-line system (14, 15), the cooling-line system (14, 15) having a mixer (20) for admixing fuel (18) with the cooling-gas flow (14, 15) and having a cooler (33) between the compressor (8) and the mixer (20).

9. Turbine (7) according to Claim 8, in which the structural component (23, 24, 25, 26) is a guide wheel (23), perferably a first guide wheel (23), which is subjected directly to the flue-gas flow (12) at the inlet to the turbine (7), or a second guide wheel (25) arranged directly behind such a first guide wheel (23).

10. Turbine (7) according to Claim 9, in which the guide wheel (23, 25) has a multiplicity of guide blades (23, 25), each of which has a cooling passage (29, 30) through which a portion of the cooling-gas flow (12) can flow.

11. Turbine (7) according to Claim 8, in which the compressor (8) is mechanically coupled to its drive.

12. Turbine (7) according to Claim 11, in which the guide wheel (23, 25) has a multiplicity of guide blades (23, 25), each of which has a cooling passage (29, 30) through which a portion of the cooling-gas flow (12) can flow.

13. Turbine (7) according to one of Claims 10 to 12, to which a compressor (8), in particular a turbocompressor (8), is allocated, which compressor (8) is connected to the turbine (7) for providing the flue-gas flow (12) via a combustion device (9) and for providing the cooling-gas flow (14, 15) via a cooling-line system (14, 15).

14. Turbine (7) according to Claim 13, in which the compressor (8) is mechanically coupled to its drive.

15. Turbine (7) according to Claim 13 or 14, in which the cooling-line system (14, 15) has a mixer (20) for admixing fuel (18) with the cooling-gas flow (14, 15).

16. Turbine (7) according to Claim 15, in which the cooling-line system (14, 15) between the compressor (8) and the mixer (20) has a cooler (33).

## Revendications

1. Procédé de détente d'un courant (12) chaud de gaz brûlé dans une turbine (7) dans laquelle il passe, dans lequel au moins un élément (23, 24, 25, 26) de structure de la turbine (7) est refroidi au moyen d'un courant (14, 15) associé de gaz de refroidissement, ce courant (14, 15) de gaz de refroidissement passant dans l'élément (23, 24, 25, 26) de structure et étant envoyé de celui-ci au courant (12) de gaz brûlé, et dans lequel il est ajouté de manière dosée au courant (12) de gaz brûlé dans la turbine (7) du combustible (18), le combustible (18) étant ajouté de manière dosée de façon, à compenser dans une grande mesure un abaissement de température du courant (12) de gaz brûlé, qui provient de l'envoi du courant (14, 15) de gaz de refroidissement ou de l'addition dosée du combustible (18), par combustion du combustible (18) ajoutée de manière dosée,
**caractérisé en ce que** le courant (14, 15) de gaz de refroidissement est constitué essentiellement d'air et le combustible (18) est mélangé pour une proportion en poids de 2 % au plus au courant (14, 15) de gaz de refroidissement, le courant (14, 15) de gaz de refroidissement étant refroidi avant l'addition du combustible (18).

2. Procédé suivant la revendication 1, dans lequel le combustible (18) est ajouté au courant (14, 15) de gaz de refroidissement, avant que celui-ci soit envoyé au courant (12) de gaz brûlé.

3. Procédé suivant la revendication 2, dans lequel le combustible (18) est ajouté au courant (14, 15) de gaz de refroidissement, avant que celui-ci passe dans l'élément (23, 24, 25, 26) de structure.

4. Procédé suivant la revendication 2 ou 3, dans lequel le combustible (18) est mélangé de manière homogène dans le courant (14, 15) de gaz de refroidissement.

5. Procédé suivant l'une des revendications précédentes, dans lequel l'élément (23, 24, 25, 26) de structure est une roue (23) directrice de la turbine (7), de préférence une première roue (23) directrice, à laquelle le courant (12) de gaz brûlé afflue directement lors de l'entrée dans la turbine (7) ou une deuxième roue (25) directrice, disposée directement derrière une telle première roue (23) directrice.

6. Procédé suivant l'une des revendications précédentes, dans lequel le courant (12) de gaz brûlé et le courant (14, 15) de gaz de refroidissement sont formés par de l'air qui est comprimé dans un compresseur (8) unique, notamment dans un turbocompresseur (8).

7. Procédé suivant la revendication 6, dans lequel le compresseur (8) est entraîné par la turbine (7).

8. Turbine (7) de détente d'un courant (12) chaud de gaz brûlé comprenant au moins un élément (23, 24, 25, 26) de structure, qui a un dispositif (29, 30) à canal de refroidissement pour un courant (14, 15) de gaz de refroidissement qui y passe et qui est envoyé au courant (12) de gaz brûlé, et auquel est associé un doseur (19, 21) d'addition dosée de combustible (18) au courant (12) de gaz de fumée, le doseur (19, 21) ayant un dispositif (21) de commande de l'addition dosée de la quantité de combustible, de façon à ce que, par la combustion du combustible ajouté de manière dosée, un abaissement de température du courant de gaz brûlé en raison de l'apport du courant (14, 15) de gaz de refroidissement soit compensé dans une grande mesure,
**caractérisé en ce qu'**il est associé à la turbine (7) un compresseur (8), notamment un turbocompresseur (8), qui communique pour mettre à disposition le courant (12) de gaz brûlé par l'intermédiaire d'un dispositif (9) de combustion et pour mettre à disposition le courant (14, 15) de gaz de refroidissement par l'intermédiaire d'un système (14, 15) de conduit de refroidissement, avec la turbine (7), le système (14, 15) de conduit de refroidissement comprenant un mélangeur (20) de mélange du combustible (18) au courant (14, 15) de gaz de refroidissement et un dispositif (33) de refroidissement interposé entre le compresseur (8) et le mélangeur (20).

9. Turbine (7) suivant la revendication 8, dans laquelle l'élément (23, 24, 25, 26) de structure est une roue (23, 25) directrice, de préférence une première roue (23) directrice, à laquelle le courant (12) de gaz brûlé afflue directement lors de l'entrée dans la turbine (7) ou une deuxième roue (25) directrice disposée directement derrière une telle première roue (23) directrice.

10. Turbine (7) suivant la revendication 9, dans laquelle la roue (23, 25) directrice a une pluralité d'aubes (23, 25) directrices, dont chacune a un canal (29, 30) de refroidissement dans lequel peut passer une partie du courant (12) de gaz de refroidissement.

11. Turbine (7) suivant la revendication 8 qui est couplée mécaniquement au compresseur (8) en vue de l'entraîner.

12. Turbine (7) suivant la revendication 11, dans laquelle la roue (23, 25) directrice a une pluralité d'aubes (23, 25) directrices, dont chacune a un canal (29, 30) de refroidissement, dans lequel peut passer une partie du courant (12) de gaz de refroidissement.

13. Turbine (7) suivant l'une des revendications 10 à 12, à laquelle est associé un compresseur (8), notamment un turbocompresseur (8), qui communique, pour la mise à disposition du courant (12) de gaz brûlé par l'intermédiaire d'un dispositif (9) de combustion et pour la mise à disposition du courant (14, 15) de gaz de refroidissement, par l'intermédiaire d'un système (14, 15) de conduit de refroidissement, avec la turbine (7).

14. Turbine (7) suivant la revendication 13, qui est couplée mécaniquement au compresseur (8) pour son entraînement.

15. Turbine (7) suivant la revendication 13 ou 14, dans laquelle le système (14, 15) de conduit de refroidissement a un mélangeur (20) pour mélanger du combustible (18) au courant (14, 15) de gaz de refroidissement.

16. Turbine (7) suivant la revendication 15, dans laquelle le système (14, 15) de conduit de refroidissement a un dispositif (33) de refroidissement entre le compresseur (8) et le mélangeur (20).
